# EUROPÄISCHE PATENTSCHRIFT

(11) **EP 3 945 158 B1**
(45) Veröffentlichungstag und Bekanntmachung des Hinweises auf die Patenterteilung: **19.02.2025**
(21) Anmeldenummer: 21183242.3
(22) Anmeldetag: 01.07.2021
(51) Int. Cl.: E01C 19/26, B60K 11/02

(54) **SCHEMELGELENKTE TANDEMWALZE UND VERFAHREN ZUM BETRIEB DERARTIGER WALZEN**
PIVOT-STEERED TANDEM ROLLER AND METHOD OF OPERATING SUCH ROLLERS
ROULEAU TANDEM À TRAVERSE PIVOTANTE ET PROCÉDÉ DE FONCTIONNEMENT DE TELS ROULEAUX

(30) Priorität: 29.07.2020 DE 102020004615
(43) Veröffentlichungstag der Anmeldung: 02.02.2022
(73) Patentinhaber: BOMAG GmbH, 56154 Boppard (DE)
(72) Erfinder: BERENZ, Andreas, 56154 Boppard (DE); BRENNER, Hagen, 56154 Boppard (DE); CHRIST, Anna Theresa, 56154 Boppard (DE); PERSCHEID, Michael, 56154 Boppard (DE); ROOS, Daniel, 56154 Boppard (DE); KREUTZ, Tobias, 56154 Boppard (DE)
(74) Vertreter: Zimmermann & Partner Patentanwälte mbB

(56) Entgegenhaltungen:
- DE-A1- 2 634 672
- DE-U1- 29 620 847
- JP-A- 2019 039 255

## Beschreibung

Die Erfindung betrifft eine schemelgelenkte Tandemwalze zur Bodenverdichtung und ein Verfahren zum Betrieb einer derartigen Tandemwalze.

Gattungsgemäße Tandemwalzen werden zur Untergrundverdichtung insbesondere beispielsweise im Straßen- und Wegebau sowie beim Bau von Plätzen und Landebahnen eingesetzt. Sie werden insbesondere typischerweise zum Verdichten von Asphalt verwendet. Tandemwalzen umfassen typischerweise einen Maschinenrahmen mit einem Fahrerstand, der eine Kabine zum Schutz des Fahrers der Walze und entsprechende Bedienelemente aufweist. Darüber hinaus umfassen gattungsgemäße Tandemwalzen typischerweise zwei in Maschinenlängsrichtung voneinander beabstandete Verdichterwalzen, die gemeinhin auch als Bandagen bezeichnet werden. Bei den Verdichterwalzen handelt es sich insbesondere um zylinderförmige Stahlbandagen, die beispielsweise glatte oder auch strukturierte Außenmantelflächen aufweisen. Typischerweise ist eine Verdichterwalze in eine Vorwärtsrichtung gesehen vom und eine Verdichterwalze in dieser Vorwärtsrichtung gesehen hinten angeordnet. Der Fahrerstand befindet sich üblicherweise dazwischen. Eine oder mehrere Verdichterwalzen können auch geteilt ausgebildet sein. Vorliegend wird mit einer Verdichterwalze somit eine sich um eine gemeinsame Rotationsachse drehende Gesamtheit bezeichnet. Die Verdichterwalzen sind jeweils rotierbar und lenkbar über eine Schemellenkung am Maschinenrahmen gelagert. Eine Schemellenkung bedeutet vorliegend, dass die Verdichterwalzen über einen Drehschemel um eine vertikale Lenkachse rotierbar ausgebildet sind, die durch die Verdichterwalze hindurch verläuft und insbesondere die Drehachse der Verdichterwalze, um die sich die Verdichterwalze zur Abrollung auf der Außenmantelfläche während der Fahrt der Tandemwalze dreht, schneidet. Eine derartige Tandemwalze mit zwei schemelgelenkten Verdichterwalzen ist aus der DE 296 20 847 U1 der Anmelderin bekannt. Zur Verstärkung der Verdichtungswirkung kann es zusätzlich vorgesehen sein, eine oder beide der Verdichterwalzen im Betrieb über einen Unwuchterreger, beispielsweise einen Vibrations- oder Oszillationserreger, in Schwingungen zu versetzen. Darüber hinaus ist es bekannt, die Verdichterwalzen im Betrieb mit einer Flüssigkeit, beispielsweise Wasser, zu benetzen, um Anhaftungen von Bodenmaterial an den Verdichterwalzen zu reduzieren oder zu verhindern. Gattungsgemäße Tandemwalzen weisen daher üblicherweise ebenfalls wenigstens einen Flüssigkeitstank auf, um die entsprechenden Flüssigkeiten, insbesondere Wasser, im Betrieb vorrätig zu halten. Zur Versorgung der gattungsgemäßen Tandemwalzen mit Energie wird typischerweise ein Antriebsmotor eingesetzt, der beispielsweise ein Dieselverbrennungsmotor ist. Um während des Arbeitsbetriebes der Tandemwalze entstehender Hitze entgegenzuwirken und/oder die Effizienz des Betriebes zu steigern, weisen diese üblicherweise ebenfalls einen Kühler, beispielsweise einen Hydraulikflüssigkeits- und/oder einen Kühlflüssigkeits- und/oder einen Ladeluftkühler auf. Diesem Kühler ist ein einen Kühlluftstrom fördernder Lüfter zugeordnet, der Kühlluft durch den Kühler hindurch fördert und dadurch die Kühlung des im Kühler enthaltenen Mediums erreicht.

Bei konventionellen schemelgelenken Tandemwalzen befinden sich der Kühler und der dem Kühler zugeordnete Lüfter typischerweise im Motorraum unter dem Fahrerstand, wo auch der Antriebsmotor angeordnet ist, oder zumindest in unmittelbarer Nähe des Motorraumes. Aus stetig strenger werdenden Abgasgesetzgebungen ergeben sich im Laufe der Jahre Änderungen von Motoren und Abgasnachbehandlungskomponenten. So müssen immer größere und/oder eine immer größere Anzahl an Komponenten, wie beispielsweise SCR-Systeme, in den Maschinen platziert werden, da Dieselverbrennungsmotoren ausreichender Leistung heutzutage weit überwiegend mit einer Abgasnachbehandlung zur Reduzierung von Stickoxidemissionen ausgerüstet werden müssen. Ebenso sind die Anforderungen an die Kühlleistung damit einhergehend gestiegen, was größere Kühler notwendig macht und/oder ein effizienteres Kühlkonzept erfordert. Die gegebenen, oft schon sehr beengten Platzverhältnisse im Motorraum einer gattungsgemäßen Tandemwalze machen dann zum Ausgleich die Gewinnung von Platz durch die Reduzierung oder Verkleinerung anderer Komponenten notwendig. Oftmals werden beispielsweise die Volumina der Wassertanks zur Benetzung der Verdichterwalzen reduziert. Dies führt allerdings natürlich dazu, dass die Wassertanks beim Betrieb der Walze öfter nachgefüllt werden müssen, was zu Verzögerungen des Arbeitsablaufes und höheren Kosten führt. Werden die Kühler aus Platzmangel dagegen nicht groß genug gestaltet, sinkt die Arbeitseffizienz der gesamten Maschine. Walzen mit Kühlsystemen sind beispielsweise aus der DE 26 34 672 A1 und der JP 2019 039 255 A bekannt.

Die Aufgabe der vorliegenden Erfindung ist es, den Betrieb einer gattungsgemäßen Tandemwalze zu optimieren und insbesondere ein besonders effektives Kühlluftmanagement zu ermöglichen.

Die Lösung der Aufgabe gelingt mit einer Tandemwalze und einem Verfahren gemäß den unabhängigen Ansprüchen. Bevorzugte Weiterbildungen sind in den abhängigen Ansprüchen angegeben.

Konkret gelingt die Lösung bei einer eingangs genannten gattungsgemäßen schemelgelenkten Tandemwalze dadurch, dass der Kühler in Vertikalrichtung über und/oder in Maschinenlängsrichtung auf Höhe einer der Verdichterwalzen angeordnet ist. Besonders bevorzugt ist es, dass der Kühler sowohl in Vertikalrichtung über und in Maschinenlängsrichtung auf Höhe einer der Verdichterwalzen angeordnet ist. In diesen wenn auch räumlich beengten Bereichen der Tandemwalze, die unter anderem üblicherweise die Lenkgelenke der Schemellenkung aufweisen, kann der vorhandene Bauraum zur Aufnahme wenigstens eines Kühlers genutzt werden. Dies ist zwar örtlich abgesetzt zum üblicherweise unterhalb der Fahrerkabine angeordneten Antriebsmotors. Dies kann in Anbetracht der gewonnenen Vorteile jedoch hingenommen werden. Der Kernpunkt der Erfindung liegt also darin, dass der Kühler aus dem Motorraum, der sich typischerweise in der Mitte der Maschine unter dem Fahrerstand befindet, in ein anderes, einer der Verdichterwalzen zugeordnetes Maschinenkompartiment verlagert wird. Der Kühler befindet sich daher außerhalb des Motorraums. Auf diese Weise wird auf der einen Seite im Motorraum Bauraum frei, der für zusätzliche Komponenten, beispielsweise ein Abgasnachbehandlungssystem (beispielsweise SCR: *"selective catalytic reduction")* genutzt werden kann. Auf der anderen Seite wird der ebenfalls Platz benötigende Kühler in einen Bereich der Tandemwalze verlegt, in dem er mit der notwendigen Größe dimensioniert werden kann, ohne hierbei andere Maschinenkomponenten maßgeblich in ihrer Größe und ihrer damit einhergehenden Effizienz einschränken zu müssen. Eine derartige Anordnung des Kühlers wurde bisher vermieden, da sie insbesondere eine vergleichsweise lange und komplexe Kühlluftführung notwendig machen kann, die sich durch große Teile der Maschine erstreckt. Dies gilt insbesondere dann, wenn Effekte des Kühlluftmanagements auf die Außenumgebung, beispielsweise durch Staubaufwirbelungen etc., vermieden werden sollen. Wie nachstehend noch näher erläutert wird, wurde bei der Erfindung in bevorzugten Ausführungsformen sogar realisiert, dass auch aus der Kühlluftführung an sich weitere Vorteile gewonnen werden können.

Unter Vertikalrichtung wird vorliegend eine Richtung senkrecht zu einem ebenen, horizontal verlaufenden Boden verstanden, auf der die Tandemwalze steht. Die Maschinenlängsrichtung ist diejenige horizontale Richtung, die üblicherweise als Vorwärts- oder Rückwärtsrichtung, insbesondere im normalen Fahrbetrieb der Tandemwalze bei Geradeausfahrt, bezeichnet wird. In diesem Fall verlaufen die Rotationsachsen der Verdichterwalzen in der Horizontalebene senkrecht zur Maschinenlängsachse. Insbesondere verläuft die Maschinenlängsrichtung parallel zu einem ebenen Boden, auf dem die Tandemwalze steht. Sollte die Tandemwalze im Hundegang betrieben werden, verläuft die Maschinenlängsrichtung schräg zu Vorwärtsrichtung. Dass sich der Kühler in Vertikalrichtung über einer der Verdichterwalzen befindet, bedeutet vorliegend, dass sich eine Projektion der Konturen der Verdichterwalze und des Kühlers in Vertikalrichtung zumindest teilweise überlappen. Dass der Kühler in Maschinenlängsrichtung auf Höhe einer der Verdichterwalzen angeordnet ist, bedeutet, dass sich die Konturen der Verdichterwalze und des Kühlers in einer Projektion quer zur Maschinenlängsrichtung zumindest teilweise überlappen.

Bei der Schemellenkung sind die Verdichterwalzen über einen drehbar am Maschinenrahmen gelagerten Drehschemel lenkbar. Der Drehschemel liegt daher in Vertikalrichtung über der Verdichterwalze und zentral am Maschinenheck oder der Maschinenfront beziehungsweise am ersten oder zweiten Lenkteil, wie nachstehend noch näher erläutert. Oberhalb des Drehschemels kann mit der vorliegenden Erfindung Bauraum zur Unterbringung des Kühlers erschlossen werden, weshalb es bevorzugt ist, dass der Kühler in Vertikalrichtung nicht nur oberhalb eines Drehschemels sondern über einem Drehschemel der Schemellenkung einer der Verdichterwalzen angeordnet ist.

Grundsätzlich kann der Kühler zur Kühlung eines beliebigen Betriebsmediums der Tandemwalze ausgebildet sein. Beispielsweise kann der Kühler als Hydraulikflüssigkeitskühler, als Kühlflüssigkeitskühler oder als Ladeluftkühler ausgebildet sein. Bevorzugt ist es allerdings, wenn der Kühler mehrere Betriebsmedien der Tandemwalze gleichzeitig kühlt (Kombikühler) oder Teil eines aus mehreren Einzelkühlern bestehenden Kühlerpaketes ist. Mit anderen Worten ist es bevorzugt, dass der Kühler als Kühlerpaket ausgebildet ist und wenigstens zwei, insbesondere alle drei, der folgenden Kühler umfasst: Einen Hydraulikflüssigkeitskühler, einen Kühlflüssigkeitskühler und/oder einen Ladeluftkühler. Da nicht sämtliche modernen Dieselmotoren einen Ladeluftkühler benötigen, ist es besonders bevorzugt, dass der als Kühlerpaket ausgebildete Kühler beispielsweise einen Hydraulikflüssigkeitskühler und einen Kühlflüssigkeitskühler umfasst.

Um die Kühlwirkung des Kühlers zu verstärken, ist dem Kühler ein Lüfter zugeordnet, der einen Kühlluftstrom fördert, wobei dieser Kühlluftstrom durch den Kühler hindurchgeleitet wird. Der Lüfter ist daher beispielsweise als luftfördernder Ventilator ausgebildet. Insgesamt liefert der dem Kühler zugeordnete Lüfter somit Kühlluft zum Kühler. Sie stehen somit in funktionalem Zusammenhang miteinander. Dies führt dazu, dass es bevorzugt sein kann, wenn der Kühler und der Lüfter in räumlicher Nähe zueinander angeordnet sind. Beispielsweise kann es daher vorgesehen sein, dass der dem Kühler zugeordnete Lüfter, analog dem Kühler, in Vertikalrichtung über und/oder in Maschinenlängsrichtung auf Höhe einer der Verdichterwalzen angeordnet ist, d.h. im gleichen Maschinenkompartiment. Bei dieser Ausführungsform ist der Lüfter also weiterhin in unmittelbarer räumlicher Nähe zum Kühler. Insbesondere befindet sich der Lüfter im selben Kompartiment der Maschine beziehungsweise im selben Maschinenraum. Auf diese Weise ergibt sich ein besonders kurzer Strömungsweg zwischen dem Lüfter und dem Kühler, was zu einer effizienten Kühlung beiträgt. Alternativ kann es vorgesehen sein, dass der Lüfter an einem Nebenabtrieb des Antriebsmotors angeordnet ist. Bei dieser Ausführungsform ist der Lüfter also in räumlicher Nähe zum Antriebsmotor angeordnet, beispielsweise weiterhin im Motorraum. Der Lüfter und der Kühler sind daher in diesem Fall grundsätzlich räumlich getrennt voneinander, da sich der Kühler außerhalb des Motorraumes befindet. Auf diese Weise kann sowohl der Bauraum im Motorraum als auch der Bauraum außerhalb des Motorraumes optimal zur Unterbringung der Komponenten der Kühlung genutzt werden. Der Lüfter kann in Strömungsrichtung der Kühlluft hinter dem Kühler angeordnet sein, so dass er Kühlluft durch den Kühler hindurch saugt. Alternativ kann der Lüfter in Strömungsrichtung der Kühlluft vor dem Kühler angeordnet sein, so dass er Kühlluft durch den Kühler hindurch bläst. Je nach dem Platzbedarf weiterer Komponenten im unmittelbaren Umfeld des Lüfters und des Kühlers kann die eine oder die andere Weise zu einer Optimierung des Bauraumverbrauchs führen. Der Lüfter kann grundsätzlich auf verschiedene Weisen angetrieben werden. So kann dem Lüfter beispielsweise ein separater, eigener Lüfterantrieb zugeordnet sein, beispielsweise ein hydraulischer oder ein elektrischer Lüfterantrieb. Durch die Verwendung eines separaten Lüfterantriebs kann der Lüfter besonders flexibel platziert werden. Alternativ kann er, insbesondere wenn der Lüfter im Bereich des Nebenabtriebs des Antriebsmotors angeordnet ist, ebenfalls von einem Nebenabtrieb des Antriebsmotors, insbesondere über einen Riementrieb, antreibbar sein. Ein unmittelbarer Antrieb des Lüfters über einen Nebenabtrieb des Antriebsmotors gestaltet sich oftmals als besonders energieeffizient.

Schemelgelenkte Tandemwalzen sind, was ihre Maschinen- bzw. Funktionsbereiche angeht, in Maschinenlängsrichtung nahezu symmetrisch aufgebaut. So lassen sich insbesondere drei Teile unterscheiden: Ein erster, vorderer Lenkteil mit der ersten Verdichterwalze, ein zweiter hinterer Lenkteil mit der zweiten Verdichterwalze und ein Antriebs- und Bedienteil zwischen den beiden Lenkteilen, wobei der Antriebs- und Bedienteil typischerweise den Fahrerstand und den unter dem Fahrerstand angeordneten Motorraum mit dem Antriebsmotor umfasst. Auch die Lenkteile umfassen allerdings eingehauste Maschinenkompartimente, in denen Komponenten der Tandemwalze untergebracht werden können. So ist es erfindungsgemäß vorgesehen, dass in Maschinenlängsrichtung sowohl vor als auch hinter dem Fahrerstand ein zumindest teilweise von einer Abdeckung und eingehauster bzw. im Wesentlichen umschlossener Maschinenraum vorhanden ist, der insbesondere zum jeweiligen Lenkteil gehört und sich insbesondere in Vertikalrichtung oberhalb jeweils einer der Verdichterwalzen befindet. Die Abdeckung kann beispielsweise eine Haube umfassen, beispielsweise aus Kunststoff, die beispielsweise verschwenkbar ausgebildet sein kann, um einen Zugang zum jeweiligen Maschinenraum freizugeben. Die Abdeckung begrenzt den Maschinenraum beispielsweise in Vertikalrichtung nach oben und/oder quer zur und/oder in Maschinenlängsrichtung. Es ist beispielsweise möglich, dass die Abdeckung einen Teil der Außenhaut beziehungsweise Außenkontur der Tandemwalze darstellt. Beide Lenkteile können jeweils eine derartige Abdeckung und einen von der Abdeckung zumindest teilweise eingehausten Maschinenraum aufweisen. Die Abdeckungen können dabei beispielsweise derart ausgebildet sein, dass sie in Richtung vom Fahrerstand weg und in Vertikalrichtung nach unten hin abfallen, um dem Fahrer aus dem Fahrerstand heraus einen besseren Blick auf den vor beziehungsweise hinter der Tandemwalze liegenden Boden zu ermöglichen. Erfindungsgemäß ist es nun vorgesehen, dass die vordere Abdeckung und die hintere Abdeckung auf ihrer vertikal oben liegenden Seite Lüftungsöffnungen für den durch den Lüfter geförderten Kühlluftstrom aufweisen. Die Lüftungsöffnungen können beispielsweise zum Eintritt von Kühlluft aus der Außenumgebung der Tandemwalze in den Maschinenraum oder zum Austritt von Kühlluft aus dem Maschinenraum in die Außenumgebung der Tandemwalze ausgebildet sein beziehungsweise genutzt werden. Besonders bevorzugt ist es, dass sowohl die vordere als auch die hintere Abdeckung jeweils derartige Lüftungsöffnungen aufweist, wobei die Lüftungsöffnungen der einen Abdeckung für den Eintritt und die Lüftungsöffnungen der anderen Abdeckung für den Austritt der Kühlluft ausgebildet sind. Durch die Anordnung der Lüftungsöffnungen auf der vertikal oben liegenden Seite der Abdeckung wird die eingesaugte Luft vergleichsweise weit vom Bodenuntergrund entfernt eingesaugt, sodass weniger Staub mit der Kühlluft in die Maschine eingesaugt wird. Durch das Ausblasen der Kühlluft auf der vertikal oben liegenden Seite der Abdeckung wird sichergestellt, dass die ausgeblasene Luft wiederum keinen Staub aufwirbelt.

Der erfindungsgemäße Kühler ist insbesondere in einem der Maschinenräume oberhalb der bzw. über den Lenkteilen bzw. den Drehschemeln untergebracht. Beispielsweise kann der Kühler im vorderen Maschinenraum oder im hinteren Maschinenraum angeordnet sein. In einer bevorzugten Ausführungsform ist ebenfalls der dem Kühler zugeordnete Lüfter in einem der Maschinenräume oberhalb der Lenkteile bzw. eines Drehschemels untergebracht, beispielsweise im vorderen Maschinenraum oder im hinteren Maschinenraum. Kühler und Lüfter können in unterschiedlichen Maschinenräumen untergebracht sein. Bevorzugt für diese Anordnung ist es, insbesondere den Lüfter im vorderen Maschinenraum über der vorderen Verdichterwalze und den wenigstens einen Kühler im hinteren Maschinenraum über der hinteren Verdichterwalze zu positionieren. Besonders bevorzugt ist es, wenn der Kühler und der dem Kühler zugeordnete Lüfter beide im selben, insbesondere dem hinteren, Maschinenraum, d.h. im Maschinenraum über der hinteren Verdichterwalze, angeordnet sind.

Insbesondere, wenn der Kühler und der Lüfter nicht im selben Maschinenraum angeordnet sind, sondern in unterschiedlichen Maschinenräumen, ist ein Strömungskanal vorgesehen, der die beiden Maschinenräume der Lenkteile, d.h. den vorderen und den hinteren Maschinenraum, durch den Motorraum im Antriebs- und Bedienteil der Tandemwalze hindurch verbindet. Ein derartiger Strömungskanal kann allerdings auch vorgesehen sein, wenn Lüfter und Kühler im selben Maschinenraum angeordnet sind. Erfindungsgemäß ist es entweder vorgesehen, dass ein Strömungskanal vorhanden ist, der derart ausgebildet ist, dass der durch den Lüfter geförderte Kühlluftstrom von der Außenumgebung der Tandemwalze in den vorderen Maschinenraum gefördert wird. Von diesem wird der Kühlluftstrom dann vertikal nach unten und nach hinten in den unter dem Fahrerstand angeordneten Motorraum gefördert. Durch den Motorraum hindurch wird der Kühlluftstrom anschließend im Wesentlichen horizontal geführt und von diesem in Richtung vertikal nach oben und nach hinten in den hinteren Maschinenraum gefördert. Vom hinteren Maschinenraum wird der Kühlluftstrom dann wieder in die Außenumgebung der Tandemwalze ausgeblasen. Diese Art der Kühlluftführung in Kombination mit der erfindungsgemäßen Positionierung des Kühlers, wie vorstehend beschrieben, ermöglicht eine besonders effiziente Kühlluftführung, verbessert den Wirkungsgrad der Kühlung gegenüber konventionellen Systemen und erlaubt somit unter anderem einen vergleichsweise umweltschonenden Betrieb. Die Förderrichtung kann dabei grundsätzlich allerdings erfindungsgemäß auch umgekehrt sein, so dass der Kühlluftstrom von der Außenumgebung über den hinteren Maschinenraum, den Motorraum, dann den vorderen Maschinenraum und wieder in die Außenumgebung gefördert wird. An einer Stelle des Strömungskanals durchströmt der Kühlluftstrom den Kühler.

Bevorzugt ist es nun vorgesehen, dass der Kühler vom Kühlluftstrom in wenigstens teilweise aufwärts gerichteter Richtung durchströmt wird, insbesondere in Bezug auf die Maschinenlängsrichtung in einer aufsteigenden und schräg nach hinten gerichteten Weise. Der Kühler, der in der Regel als ein im Wesentlichen quaderförmiger Körper mit zwei einander gegenüberliegenden, im Wesentlichen planen Durchströmungsflächen (Kühllufteintritt und Kühlluftaustritt) ausgebildet ist, ist somit bevorzugt in einer Schräglage positioniert. "Schräglage" bezieht sich auf eine Anordnung, bei der die Ebenen der Durchströmungsflächen in einem Winkel zu einer Vertikalen verlaufen bzw. diese schneiden. Die Schräglage für den Kühler wir dabei insbesondere derart gewählt, dass der Kühler in Maschinenlängsrichtung in Richtung zur Fahrerkabine ansteigt und in Richtung von der Fahrerkabine weg abfällt. Der von der Fahrerkabine weiter entfernt liegend Bereich des Kühlers liegt somit in Vertikalrichtung tiefer als der zur Fahrerkabine hin orientierte Bereich des Kühlers.

Bevorzugt ist es nun, die Schräglage des Kühlers derart zu wählen, dass die Durchströmungsrichtung des Kühlers mit dem durch den Lüfter geförderten Kühlluftstrom weniger von der Vertikalrichtung abweicht als von der Horizontalrichtung. Beispielsweise soll die Durchströmungsrichtung maximal 40°, bevorzugt maximal 30°, weiter bevorzugt maximal 20° und besonders bevorzugt maximal 10° von der Vertikalrichtung abweichen. Hierdurch kann die Ebene der Haupterstreckung des Kühlers sich in entsprechender Weise an die Horizontale annähern. Dadurch lässt sich der Kühler besonders platzsparend unter der Abdeckung der Maschinenräume der Lenkteile der Tandemwalze anordnen und gleichzeitig sind optimierte Sichtverhältnisse möglich. Die bevorzugte aufwärtsgerichtete Durchströmungsrichtung führt darüber hinaus noch zu weiteren Vorteilen, die nachstehend noch näher beschrieben werden.

Wie eingangs bereits erwähnt, weisen gattungsgemäße Tandemwalzen typischerweise Flüssigkeitstanks, insbesondere Wassertanks, auf, die zur Benetzung der Verdichterwalzen zur Vermeidung des Anhaftens des zu verdichtenden Materials eingesetzt werden. Um trotz des zusätzlichen Gewichts der Flüssigkeitstanks einen möglichst tiefen Schwerpunkt der Maschine zu gewährleisten, sind die Flüssigkeitstanks bevorzugt im Bereich des Motorraumes bzw. zumindest unterhalb des Fahrerstandes am Antriebs- und Bedienteil der Tandemwalze angeordnet. Gleichzeitig muss eine Zugänglichkeit zum Motorraum für Wartungsarbeiten gewährleistet sein. Es ist daher gemäß einer bevorzugten Ausführungsform besonders vorteilhaft, wenn der Motorraum quer zur Maschinenlängsrichtung beidseitig von jeweils einer Motorraumtür begrenzt ist, wobei die Motorraumtüren jeweils einen Flüssigkeitstank, bevorzugt zur Bevorratung von Wasser für die Berieselungsanlage, aufweisen. Der Flüssigkeitstank ist mit der jeweiligen Motorraumtür verschwenkbar ausgebildet beziehungsweise an dieser angeordnet. Die Flüssigkeitstanks liegen sich also quer zur Maschinenlängsrichtung an den jeweiligen Maschinenseiten gegenüber. Insbesondere ist nun vorgesehen, dass der durch den Lüfter geförderte Kühlluftstrom zwischen den beiden Flüssigkeitstanks hindurch gefördert wird, wobei der Kühler außerhalb des zwischen den beiden Flüssigkeitstanks liegenden Bereichs angeordnet ist. Der Strömungskanal durch den Motorraum benötigt deutlich weniger Platz, solange der Kühler nicht ebenfalls im Motorraum angeordnet ist. Auf diese Weise können daher die Flüssigkeitstanks mit einem ausreichenden Volumen für eine lange Arbeitszeit ohne Befüllung ausgestattet werden. Gleichzeitig leidet hierunter nicht die Kühlleistung des Kühlers, da dieser in einem anderen Maschinenkompartiment, außerhalb des Motorraums, angeordnet ist. Die Erfindung führt insbesondere in dem Fall, wenn ein, mehrere oder insbesondere sämtliche Flüssigkeitstanks der Tandemwalze im Antriebs- und Bedienteil angeordnet sind, beispielsweise im Motorraum, und der Kühler in einem der Lenkteile angeordnet ist, beispielsweise in einem der Maschinenräume, zu einer vorteilhaften Ausnutzung des Bauraums.

Grundsätzlich ist es ausreichend, wenn die Kühlluft durch die Lüftungsöffnungen an einer der Abdeckungen eingesaugt wird. Die durch die Tandemwalze hindurchgeleitet Kühlluft wird allerdings nicht nur im Kühler erwärmt, sondern beispielsweise ebenfalls vom Antriebsmotor im Motorraum. Es kann daher vorteilhaft sein, nochmals frische Kühlluft in den Strömungskanal einzuleiten, beispielsweise in Strömungsrichtung der Kühlluft gesehen hinter dem Motorraum bzw. stromabwärts zum Motorraum. Hierfür ist es in einer bevorzugten Ausführungsform vorgesehen, dass zwischen dem Fahrerstand und den Lüftungsöffnungen durch die der durch den Lüfter geförderte Kühlluftstrom in die Außenumgebung der Tandemwalze austritt, ein, insbesondere zusätzlicher, Ansaugkanal angeordnet ist, durch den Luft aus der Außenumgebung der Tandemwalze angesaugt und dem Kühlluftstrom hinzugefügt wird. Der Ansaugkanal kann beispielsweise ebenfalls in der Abdeckung oder einem beliebigen anderen Bauteil der Tandemwalze angeordnet sein, insbesondere in einem Bereich zwischen der Fahrerkabine und dem der Fahrerkabine zugewandten Bereich der Abdeckung. Durch den Ansaugkanal wird Luft aus der Außenumgebung der Tandemwalze angesaugt, die noch nicht vom Motor erwärmt wurde. Diese durch den Ansaugkanal angesaugte Luft wird bevorzugt unter Umgehung des Motorraumes in den Strömungskanal und zum Kühler geleitet. Auf diese Weise wird der Kühler bevorzugt aus einer Mischung von Kühlluft, die den Motorraum passiert hat, und Kühlluft, die den Motorraum nicht passiert hat, durchströmt. Insbesondere bei einer starken Aufheizung der Kühlluft durch den Antriebsmotor im Motorraum unterstützt der Ansaugkanal die Kühleffizienz maßgeblich. Grundsätzlich ist es auch möglich, den für den Kühler zur Kühlung genutzten Kühlluftstrom unter vollständiger Umgehung der Motoraums zu realisieren, insbesondere unter Rückgriff auf einen Kühllufteinlass in Maschinenlängsrichtung im Bereich derjenigen Abdeckung, die den Kühler überdeckt bzw. in dem Maschinenbereich vor oder hinter der Fahrerkabine in Maschinenlängsrichtung, in dem der Kühler angeordnet ist. Auch eine Anordnung des Kühllufteinlasses zwischen der Fahrerkabine und der den Kühler abdeckenden Abdeckung ist möglich. Mit umfasst ist somit grundsätzlich eine Anordnung, bei der, insbesondere unter Umgehung des Motoraums, sowohl der Kühllufteinlass als auch der Kühlluftauslass in dem vorderen oder dem hinteren Maschinenteil, besonders bevorzugt jeweils gebildet durch die eine Abdeckung, angeordnet sind.

Wie bereits erläutert wurde, ist es vorteilhaft, wenn der Kühler vom Kühlluftstrom in mindestens teilweise aufwärts gerichteter Richtung durchströmt wird. Besonders vorteilhaft ist es nun, wenn der Kühler derart angeordnet ist, dass er von dem durch den Lüfter geförderten Kühlluftstrom in Richtung schräg nach oben und vom Fahrerstand weg durchströmt wird. Insbesondere können bevorzugt auch die Lüftungsöffnungen, durch die der durch den Lüfter geförderte Kühlluftstrom in die Außenumgebung der Tandemwalze austritt, derart ausgebildet sein, dass der durch den Lüfter geförderte Kühlluftstrom beim Austritt durch die Lüftungsöffnungen in Richtung schräg nach oben und vom Fahrerstand weg geleitet wird. Sowohl die Anordnung des Kühlers als auch die Ausbildung der Lüftungsöffnungen sorgen also für eine Leitung der Kühlluft beziehungsweise des Kühlluftstromes in dieselbe Richtung, konkret bevorzugt schräg nach oben und vom Fahrerstand weg. Zu diesem Zweck sind beispielsweise Leitschaufeln im Kühler oder an den Lüftungsöffnungen der Abdeckung angeordnet, die den Luftstrom entsprechend leiten beziehungsweise umlenken. Auf diese Weise kann der Kühlluftstrom mit besonders wenig Widerstand geleitet werden, was die notwendige Leistung des Lüfters absenkt. Gleichzeitig sorgt die Richtung des austretenden Kühlluftstromes vom Fahrerstand weg dafür, dass die aus dem Inneren der Tandemwalze kommende, stark erwärmte Kühlluft in der Außenumgebung verteilt wird und dabei nicht den Fahrer der Tandemwalze negativ beeinflusst. Selbst bei geöffnetem Fenster der Fahrerkabine wird so ein Eindringen von heißer Kühlabluft verhindert.

Der austretende Kühlluftstrom bzw. die gezielt Anordnung und/oder Leitung des austretenden Kühlluftstroms kann weiter vorteilhaft ausgestaltet und in das vorliegende System integriert werden. Beispielsweise kann der austretende Kühlluftstrom einen nach oben und vom Fahrerstand weg gerichteten Strömungsteppich bzw. Strömungsvorhang bilden, der verhindert, dass Abgase der Tandemwalze zum Fahrerstand gelangen. Insbesondere kann der Kühlluftstrom derart, über beispielsweise eine entsprechende Anordnung und Ausbildung des Kühlluftauslasses und/oder durch ergänzende Leiteinrichtungen, wie beispielsweise Leitschaufeln, gerichtet werden, dass er die Abgase der Tandemwalze zumindest teilweise erfasst und vom Fahrerstand entfernt. Hierfür ist es bevorzugt vorgesehen, dass die Lüftungsöffnungen durch die der durch den Lüfter geförderte Kühlluftstrom in die Außenumgebung der Tandemwalze austritt und ein Endrohr einer Abgasanlage des Antriebsmotors an derselben Abdeckung angeordnet sind, und dass die Lüftungsöffnungen zumindest teilweise näher am Fahrerstand angeordnet sind als das Endrohr. Die Kühlluftaustrittsöffnungen sind somit in Maschinenlängsrichtung zwischen dem Abgasauslass des Endrohrs und der Fahrerkabine in der Abdeckung positioniert. Das Endrohr bezeichnet denjenigen Rohrstutzen, aus dem die Abgase der Abgasanlage entweichen ("Auspuff"). Das Endrohr ist weiter vom Fahrerstand entfernt angeordnet als zumindest ein Teil der Lüftungsöffnungen, durch die der Kühlluftstrom austritt. Auf diese Weise und die vorher beschriebene Strömungsrichtung der Kühlluft ergibt sich, dass die Kühlluft die Abgase erfasst und zumindest teilweise mitreißt oder zumindest einem Anströmen der Fahrerkabine durch die Abgase entgegenwirkt. Dies funktioniert insbesondere dann besonders gut, wenn ein Abgasnachbehandlungssystem, beispielsweise ein SCR-System, eingesetzt wird. In diesem Fall kann auf einen Endschalldämpfer verzichtet werden, wodurch das Endrohr besonders kurz als Endrohrstummel ausgebildet sein kann. Bevorzugt ist der Endrohrstummel derart angeordnet, dass er in Vertikalrichtung nicht über die Oberkante der Abdeckung vorsteht bzw. die Kühlluftauslassöffnungen in der Abdeckung in Vertikalrichtung nicht vollständig überragt, was insbesondere bei einer von der Fahrerkabine weg schräg nach unten abfallenden Abdeckung von Bedeutung ist. Ganz grundsätzlich ist es bevorzugt, wenn das Endrohr nicht mehr als 30 cm, bevorzugt nicht mehr als 20 cm, besonders bevorzugt nicht mehr als 15 cm, aus der Abdeckung herausragt. Die Austrittsöffnung des Endrohres ist bevorzugt in Vertikalrichtung unter oder maximal auf derselben Höhe angeordnet wie die Lüftungsöffnungen, aus denen die Kühlluft austritt. Besonders vorteilhaft ist es ebenfalls, wenn der Endrohrstummel derart ausgebildet ist, dass die Abgase ebenfalls schräg nach oben und in Richtung vom Fahrerstand weg gerichtet aus dem Auslass des Endrohrs austreten. Eine weitere besonders vorteilhafte Ausführungsform sieht vor, dass das Endrohr von den Lüftungsöffnungen, durch die der Kühlluftstrom entweicht, umgeben ist, wodurch eine besonders verlässliche Erfassung des Abgasstromes durch den Kühlluftstrom gewährleistet wird. Sind die Lüftungsöffnungen beispielsweise als siebartiges Blech ausgebildet, so kann das Endrohr dieses Blech in der Mitte durchdringen.

Grundsätzlich gilt ferner, dass der Kühler und der Lüfter relativ zueinander derart angeordnet werden können, dass der Lüfter die Kühlluft durch den Kühler saugt oder drückt.

Die eingangs genannte Aufgabe wird ebenfalls gelöst durch ein Verfahren zum Betrieb einer erfindungsgemäßen schemelgelenkten Tandemwalze gemäß den vorhergehenden Ausführungen, auf die hiermit ergänzend Bezug genommen wird. Für das erfindungsgemäße Verfahren gelten dieselben Weiterbildungen, Merkmale, Wirkungen und Vorteile in übertragener Art und Weise, wie sie für die erfindungsgemäße Tandemwalze beschrieben worden sind, und umgekehrt. Es wird lediglich zur Vermeidung von Wiederholungen auf die vorstehenden Ausführungen zur Tandemwalze Bezug genommen. Konkret umfasst das erfindungsgemäße Verfahren die Schritte: Einsaugen von Kühlluft aus der Außenumgebung der Tandemwalze in einen vorderen oder hinteren Maschinenraum; Leiten der Kühlluft nach unten in einen Motorraum und entlang der Maschinenlängsrichtung; Leiten der Kühlluft nach oben in den jeweils anderen vorderen oder hinteren Maschinenraum; Durchströmen eines im vorderen oder hinteren Maschinenraum angeordneten Kühlers mit der Kühlluft; und Ausblasen der Kühlluft in die Außenumgebung der Tandemwalze. Durch das Durchströmen des Kühlers im vorderen oder hinteren Maschinenraum anstatt wie im Stand der Technik üblich im Motorraum, werden die erfindungsgemäßen Vorteile erzielt, dass der Platzbedarf des Kühlers in einem der Maschinenräume optimal gedeckt werden kann, ohne dabei die Größe anderer Komponenten negativ zu beeinflussen. Das Leiten und Lenken des Kühlluftstromes erfolgt durch den vorstehend bereits beschriebenen Strömungskanal.

Eine bevorzugte Weiterbildung des erfindungsgemäßen Verfahrens kennzeichnet sich durch ein Einsaugen von Kühlluft durch einen Ansaugkanal zwischen einem Fahrerstand und Lüftungsöffnungen, durch die der durch den Lüfter geförderte Kühlluftstrom in die Außenumgebung der Tandemwalze austritt. Über den Ansaugkanal kann auch ein eigenständiger, separater Kühlluftkreislauf geschaffen werden, der beispielsweise über den Ansaugkanal, durch den an dieser Seite der Tandemwalze angeordneten Maschinenraum, hier durch den Kühler, und dann durch die Lüftungsöffnungen der Abdeckung das Maschinenraumes in die Außenumgebung, führt. Auf diese Weise würde dieser separate Kühlluftkreislauf den Motorraum umgehen und für eine erhöhte Kühleffizienz am Kühler sorgen.

Auch für das Verfahren ist es bevorzugt, dass das Einsaugen und das Ausblasen der Kühlluft sowie die Durchströmung des Kühlers nach Möglichkeit bereits in der Richtung erfolgt, in der der Kühlluftstrom an der jeweiligen Stelle geleitet wird, um einen möglichst geringen Strömungswiderstand zu erreichen. Es ist daher bevorzugt, dass das Einsaugen der Kühlluft schräg nach unten und/oder das Durchströmen des Kühlers mit Kühlluft schräg nach oben und/oder das Ausblasen der Kühlluft schräg nach oben und vom Fahrerstand weg erfolgt. Durch die entsprechende Ausrichtung der beteiligten Komponenten, insbesondere des Kühlers und des Lüfters, wird darüber hinaus Bauraum gespart.

Um den Abgasstrom des Antriebsmotors vom Fahrerstand und dem Fahrer der Tandemwalze fernzuhalten, ist es ferner bevorzugt, dass das Ausblasen der Kühlluft in die Außenumgebung der Tandemwalze derart erfolgt, dass der Kühlluftstrom in Richtung auf ein Endrohr einer Abgasanlage des Antriebsmotors geleitet wird. Insbesondere wird sowohl der Kühlluftstrom als auch der Abgasstrom aus dem Endrohr in der gleichen Richtung ausgeblasen, wobei der Kühlluftstrom zumindest teilweise näher am Fahrerstand ausgeblasen wird als der Abgasstrom. Mit anderen Worten wird der Kühlluftstrom und der Abgasstrom in der Außenumgebung der Tandemwalze zusammengeleitet, und zwar in Richtung schräg nach oben und vom Fahrerstand weg.

Die Erfindung wird nachstehend anhand der in den Figuren gezeigten Ausführungsbeispiele näher erläutert. Es zeigen schematisch:
Figur 1: Eine gattungsgemäße Tandemwalze in Seitenansicht;
Figur 2: eine mögliche Kühlluftführung durch die Tandemwalze gemäß Figur 1;
Figur 3: eine weitere mögliche Kühlluftführung durch die Tandemwalze gemäß Figur 1;
Figur 4: eine weitere mögliche Kühlluftführung durch die Tandemwalze gemäß Figur 1;
Figur 5: eine Draufsicht einer möglichen Kühlluftführung;
Figur 6: eine Draufsicht einer weiteren möglichen Kühlluftführung; und
Figur 7: ein Ablaufdiagramm des Verfahrens.

Gleiche beziehungsweise gleich wirkende Bauteile sind in den Figuren mit dem gleichen Bezugszeichen gekennzeichnet. Sich wiederholende Bauteile sind nicht in jeder Figur gesondert beziffert.

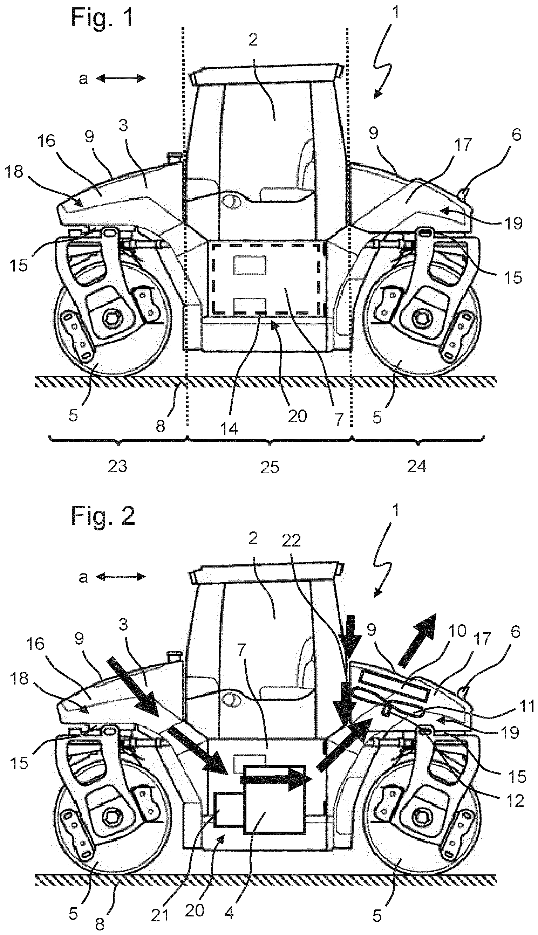

Figur 1 zeigt eine schemelgelenkte Tandemwalze 1. Die Tandemwalze 1 weist einen Maschinenrahmen 3 auf, der von zwei Verdichterwalzen 5 getragen wird. Die Verdichterwalzen 5 sind jeweils über einen Drehschemel 15 um eine vertikale Lenkachse rotierbar am Maschinenrahmen 3 gelagert. In der Maschinenlängsrichtung a in der Mitte der Maschine ist ein Fahrerstand 2 angeordnet, der beispielsweise die Bedienelemente der Tandemwalze 1 enthält und in der sich ein Bediener während des Betriebs der Tandemwalze 1 aufhält. Im Arbeitsbetrieb bewegt sich die Tandemwalze 1 in Vorwärts- oder Rückwärtsrichtung, die ohne Lenkeinschlag der Maschinenlängsrichtung a entsprechen, über den Boden 8 und verdichtet diesen.

Die in Figur 1 links dargestellte Seite der Tandemwalze 1 wird typischerweise als Vorderseite, die rechts dargestellte Seite als Hinterseite bezeichnet, auch wenn die Tandemwalze 1 sowohl vorwärts als auch rückwärts arbeiten kann und einen vergleichsweise symmetrischen Aufbau aufweist. So lässt sich die Tandemwalze 1 von ihrem Grundaufbau und insbesondere auch von ihrer Rahmengestaltung her beispielsweise in einen ersten Lenkteil 23, einen zweiten Lenkteil 24 und einen Antriebs- und Bedienteil 25 einteilen. Die beiden Lenkteile 23, 24 umfassen jeweils eine Verdichterwalze 5 und einen Teil des Maschinenrahmens 3. Sie weisen beispielsweise eine vordere Abdeckung 16 und eine hintere Abdeckung 17 auf, die jeweils einen vorderen Maschinenraum 18 und einen hinteren Maschinenraum 19 zumindest teilweise ein- bzw. umhausen. Wichtig ist, dass der vordere und der hintere Lenkteil 23 und 24 derart ausgebildet sind, dass jeweils eine Art Aufbau, umfassend einen Teil des Maschinenrahmens und jeweils eine Abdeckung, oberhalb der jeweiligen Verdichterwalze vorgesehen ist. Zwischen den beiden Lenkteilen 23, 24 befindet sich der mittige Antriebs- und Bedienteil 25. Dieser weist den Fahrerstand 2 auf, sowie einen unter dem Fahrerstand liegenden Motorraum 20, der quer zur Maschinenlängsrichtung a beidseitig jeweils von einer Motorraumtür 7 begrenzt ist. Der Motorraum liegt in Vertikalrichtung gesehen auf Höhe der vorderen und hinteren Verdichterwalzen. Ferner liegt der Motorraum im Wesentlichen in Vertikalrichtung unterhalb der beiden vorstehend beschriebenen Aufbauten bzw. der von der jeweiligen Abdeckung abgedeckten Innenräume.

In den Motorraumtüren 7 können Flüssigkeitstanks 14, beispielsweise Wassertanks, untergebracht. Im Motorraum 20, zwischen den Flüssigkeitstanks 14 und den Motorraumtüren 7, befindet sich der Antriebsmotor 4 (siehe Figuren 2-6), der beispielsweise als Dieselverbrennungsmotor ausgebildet ist und beispielsweise eine Abgasnachbehandlungseinrichtung, insbesondere eine SCR-Vorrichtung 21, umfassen kann.

Ein erstes Ausführungsbeispiel einer erfindungsgemäßen Kühlung der Tandemwalze 1 geht aus Figur 2 hervor. Wie in der Figur gezeigt, ist der Kühler 10, der beispielsweise als Hydraulikölkühler, Wasserkühler oder Ladeluftkühler oder eine Kombination zweier oder dreier dieser Kühler ausgebildet ist, im hinteren Maschinenraum 19 angeordnet. Es können auch noch andere Kühler vorgesehen sein, beispielsweise für eine Klimaanlage etc. Durch die Anordnung des Kühlers 10 im hinteren Maschinenraum 19 muss der Kühler 10 nicht wie üblich zusammen mit dem Antriebsmotor 4 im Motorraum 20 untergebracht werden. Auf diese Weise kann der Platz im Motorraum 20 von anderen Komponenten genutzt werden, beispielsweise der SCR-Vorrichtung 21. Gleichzeitig kann der Kühler 10 allerdings auch mit einer ausreichenden Größe ausgebildet werden, da im hinteren Maschinenraum 19 ein geringerer Platzmangel herrscht als im Maschinenraum 20. Ferner erlaubt dies eine besonders effiziente Kühlluftführen, da insgesamt ein deutlich verbessert durchströmbarer Kühlluftströmungskanal erhalten wird.

Durch die schwarzen Pfeile in Figur 2 wird die Strömungsrichtung der Kühlluft innerhalb des Maschinenrahmens 3 der Tandemwalze 1 angezeigt. Zuerst wird Kühlluft aus der Außenumgebung der Tandemwalze 1 durch Lüftungsöffnungen 9 auf der vertikal oberen Seite der vorderen Abdeckung 16 in den vorderen Maschinenraum 18 eingesaugt. Von dort wird die Kühlluft nach unten und in Maschinenlängsrichtung a nach hinten in den Motorraum 20 transportiert. Diesen durchströmt die Kühlluft im Wesentlichen horizontal, also in Maschinenlängsrichtung a nach hinten, und streift dabei am Antriebsmotor 4 vorbei. Aus dem Motorraum 20 heraus wird die Kühlluft sodann vertikal nach oben und weiter in Maschinenlängsrichtung a nach hinten transportiert, bis sie in den hinteren Maschinenraum 19 gelangt. Von dort wird die Kühlluft dann durch Lüftungsöffnungen 9 in der hinteren Abdeckung 17 in die Außenumgebung der Tandemwalze 1 ausgeblasen. Bewerkstelligt wird der Kühlluftstrom beziehungsweise die Förderung der Kühlluft durch den Lüfter 11, der beispielsweise von einem separaten Lüfterantrieb 12 angetrieben wird, der im gezeigten Ausführungsbeispiel beispielsweise ein Hydraulikantrieb oder ein Elektroantrieb sein kann. Der Lüfter 11 ist zusammen mit dem Kühler 10 am zweiten ("hinteren") Lenkteil 24, konkret im hinteren Maschinenraum 19, angeordnet. Er saugt die Kühlluft über die Lüftungsöffnungen 9 am ersten Lenkteil 23 in den vorderen Maschinenraum 18, von dort in den Maschinenraum 20 im Antriebs- und Bedienteil 25, dort am Antriebsmotor 4 vorbei und weiter in Maschinenlängsrichtung a nach hinten in den hinteren Maschinenraum 19. Von dort bläst der Lüfter 11 die Kühlluft erst durch den Kühler 10 und dann durch die Lüftungsöffnungen 9 der hinteren Abdeckung 17 in die Außenumgebung der Tandemwalze 1. Der Lüfter 11 ist im gezeigten Ausführungsbeispiel also bezogen auf die Strömungsrichtung der Kühlluft stromaufwärts des Kühlers 10 angeordnet. Die Kühlluftführung könnte allerdings auch so ausgebildet sein, dass die Strömungsrichtung der Kühlluft genau umgekehrt ist, diese also an der hinteren Abdeckung 17 eingesaugt und an der vorderen Abdeckung 16 ausgeblasen wird.

Figur 2 zeigt zusätzlich eine optionale Ergänzung und/oder alternative Lösung der beschriebenen Kühlung. Konkret kann ein Ansaugkanal 22 ausgebildet sein, durch den, insbesondere zusätzliche, Kühlluft unter Umgehung des Motorraumes 20 in den Kühlluftkanal und zum Kühler 10 gelangt. Der Ansaugkanal 22 ist am hinteren beziehungsweise zweiten Lenkteil 24 angeordnet und verläuft beispielsweise ebenfalls durch die hintere Abdeckung 17 oder in einem Bereich zwischen der Fahrerkabine und der hinteren Abdeckung 17. Durch die, insbesondere zusätzlich, durch den Ansaugkanal 22 zugeführte, den Motorraum 20 umgehende Kühlluft wird die Temperatur des Kühlluftstromes insgesamt gesenkt, sodass die Kühleffizienz des Kühlers 10 steigt. Gemäß einer weiteren alternativen Ausführungsform wird auf die Luftführung durch den vorderen Maschinenraum 18 und den Motorraum 20 komplett verzichtet und allein ein Kreislauf über den Ansaugkanal 22 und den hinteren Maschinenraum 19 erstellt. Auf diese Weise wird der Kühler 10 von besonders kühler Kühlluft durchströmt, sodass seine Effizienz besonders hoch ist.

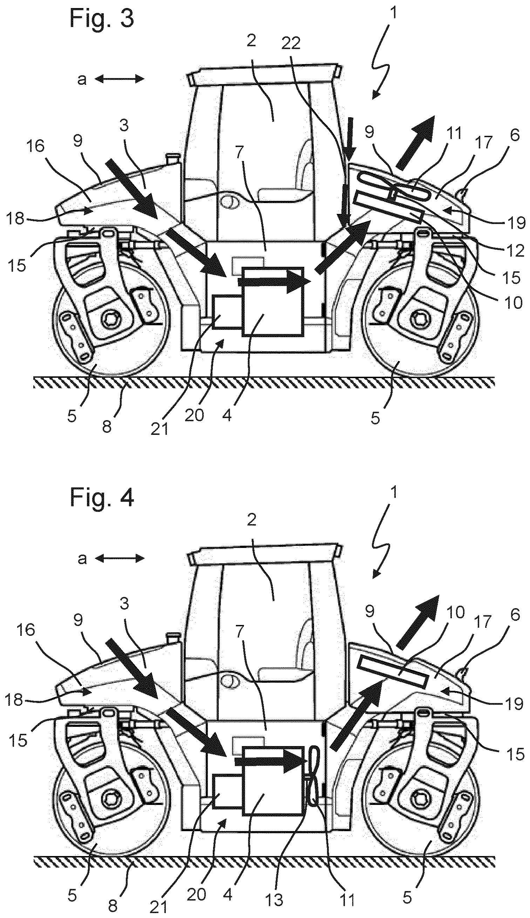

Figur 3 zeigt eine alternative Ausführungsform, bei der im Unterschied zur Ausführungsform der Figur 2 der Kühler 10 in Bezug auf die Strömungsrichtung der Kühlluft stromaufwärts des Lüfters 11 angeordnet ist. Mit anderen Worten saugt der Lüfter 11 die Kühlluft durch den Kühler 10 und bläst sie dann durch die Lüftungsöffnungen 9 der hinteren Abdeckung 17 in die Außenumgebung der Tandemwalze 1 aus. Der Lüfter 11 ist dabei weiterhin zusammen mit dem Kühler 10 im hinteren Maschinenraum 19 angeordnet und wird von einem separaten Lüfterantrieb 12 betrieben. Im Vergleich zur Ausführungsform der Figur 2 ändert sich damit die Reihenfolge des Kühlers 10 und des Lüfters 11 in Bezug auf die Strömungsrichtung der Kühlluft.

In der weiteren alternativen Ausführungsform der Erfindung gemäß Figur 4 sind der Kühler 10 und der Lüfter 11 nicht mehr in unmittelbarer Nähe zueinander und in einem gemeinsamen Innenraumkompartiment angeordnet, wie bei den bisherigen Ausführungsformen, sondern örtlich zueinander auseinanderliegend. Konkret ist der Lüfter 11 an einem Nebenabtrieb 13 des Antriebsmotors 4 angeordnet und wird von diesem angetrieben, beispielsweise über einen Riementrieb. Der Lüfter 11 befindet sich daher im Antriebs- und Bedienteil 25 der Tandemwalze 1, konkret im Motorraum 20. Der Kühler 10 dagegen ist weiterhin im hinteren Maschinenraum 19 angeordnet, also außerhalb des Motorraums 20. Die Luftführung entspricht derjenigen der vorherigen Ausführungsformen. Es ist in diesem Zusammenhang im Übrigen auch möglich, den Lüfter unterhalb der vorderen Abdeckung zu positionieren und den Kühler unterhalb der hinteren Abdeckung oder umgekehrt.

In sämtlichen gezeigten Ausführungsbeispielen der Erfindung kann die Strömungsrichtung der Kühlluft grundsätzlich umgedreht werden. Es ist allerdings vorteilhaft, wenn die Kühlluft am selben Maschinenteil ausgeblasen wird, wie die Abgase des Verbrennungsmotors. Konkret ist bei den in den Figuren gezeigten Tandemwalzen 1 am zweiten Lenkteil 24, mit anderen Worten am hinteren Maschinenteil, ein Endrohr 6 der Abgasanlage der Tandemwalze 1 angeordnet. Aus dem Endrohr 6 werden die Abgase des Antriebsmotors 4 in die Außenumgebung der Tandemwalze 1 abgegeben. Das Endrohr 6 leitet die Abgase beispielsweise ebenfalls durch die hintere Abdeckung 17. Wie in den Figuren gezeigt, fällt die hintere Abdeckung 17 in Richtung vom Fahrerstand 2 weg und vertikal nach unten ab. Das Endrohr 6 kann durch die Verwendung der SCR-Vorrichtung ohne Endschalldämpfer und daher besonders kurz ausgebildet sein. Darüber hinaus ist das Endrohr 6 derart ausgebildet, dass die Austrittsöffnung für die Abgase in Vertikalrichtung unter oder maximal auf derselben Höhe liegen, wie die Lüftungsöffnungen 9, durch die die Kühlluft aus dem Maschinenraum 19 austritt. Die entsprechenden Lüftungsöffnungen 9 wiederum sind näher am Fahrerstand 2 angeordnet als das Endrohr 6. Mit anderen Worten befinden sich die Lüftungsöffnungen 9 zwischen dem Fahrerstand 2 und dem Endrohr 6. Gemäß einer alternativen Ausführungsform kann ebenfalls vorgesehen sein, dass das Endrohr 6 insbesondere in und/oder quer zur Maschinenlängsrichtung a gesehen beidseitig von den Lüftungsöffnungen 9 umgeben ist. Der Lüfter 11, der Kühler 10 und die Lüftungsöffnungen 9, durch die die Kühlluft in die Außenumgebung der Tandemwalze 1 austritt, sind derart ausgebildet, dass die Kühlluft in Richtung vom Fahrerstand 2 weg und schräg nach oben ausgeblasen wird. Auch das Endrohr 6 ist derart ausgebildet, dass die Abgase aus dem Endrohr 6 in dieser Richtung austreten. Auf diese Weise bildet die austretende Kühlluft einen Strömungsteppich, der sich zwischen dem Fahrerstand 2 und dem Endrohr 6 befindet und daher den Fahrer der Tandemwalze 1 von den Abgasen abschirmt. Aufgrund des höheren Volumenstroms und der höheren Geschwindigkeit der austretenden Kühlluft im Vergleich zum Abgasstrom, werden die Abgase auf diese Art und Weise ebenfalls vom austretenden Kühlluftstrom erfasst und weiter vom Fahrerstand 2 wegtransportiert und in der Außenumgebung verteilt. Auch dies führt zu einer geringeren Abgasbelastung des Fahrers der Tandemwalze 1.

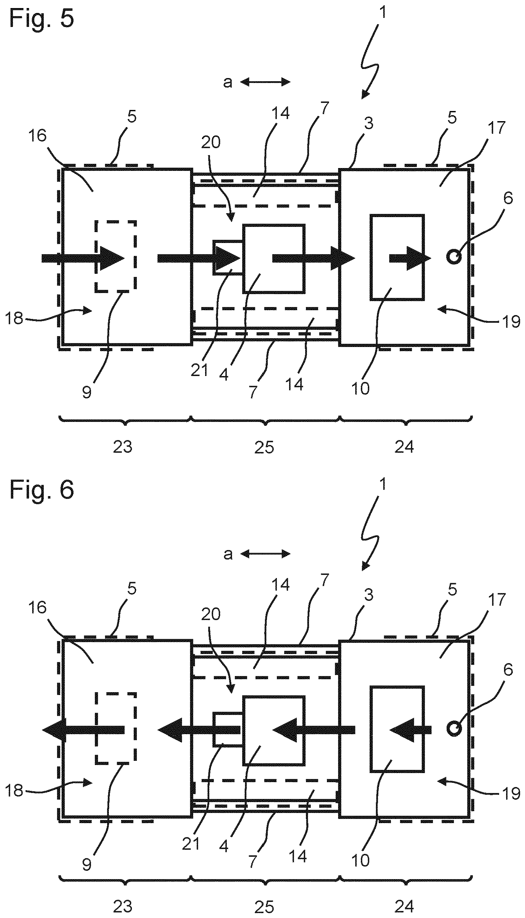

Die erfindungsgemäße Führung der Kühlluft wird ebenfalls nochmals in den Figuren 5 und 6 dargestellt. Diese zeigen jeweils eine Draufsicht auf die Tandemwalze 1, wobei aus Übersichtlichkeitsgründen der Fahrerstand 2 weggelassen wurde. Die Figuren 5 und 6 verdeutlichen insbesondere, wie die Kühlluft über den ersten Lenkteil 23, den Antriebs- und Bedienteil 25 und den zweiten Lenkteil 24 durch die Tandemwalze 1 geführt wird. Beispielsweise illustriert eine Zusammenschau der Figuren 1 und 5, wie die beiden an den Motorraumtüren 7 angeordneten Flüssigkeitstanks 14 angeordnet sind. Diese befinden sich auf gegenüberliegenden Seiten der Tandemwalze 1 und können mit den Motorraumtüren 7 verschwenkt werden. Durch die Anordnung der Flüssigkeitstanks 14 in dieser Weise liegt der Schwerpunkt der Tandemwalze 1 bei befüllten Flüssigkeitstanks 14 besonders tief, was aus Gründen der Standsicherheit vorteilhaft ist. Darüber hinaus lassen sich die Flüssigkeitstanks 14 bequem von einem auf dem Boden 8 stehenden Bediener nachfüllen. Ein Kernpunkt der Erfindung liegt nun darin, dass für eine Vergrößerung des Kühlers 10 nicht auf eine Verkleinerung der Flüssigkeitstanks 14 zurückgegriffen wird, sondern dass der Kühler 10 außerhalb des Motorraums 20 angeordnet ist, konkret in einem der Maschinenräume 18, 19. Auf diese Weise muss lediglich der Kühlluftstrom durch den Motorraum 20 und insbesondere zwischen den Flüssigkeitstanks 14 hindurch geleitet werden. Hierfür reicht ein vergleichsweise kleiner Zwischenraum zwischen dem Antriebsmotor 4 und den Flüssigkeitstanks 14 aus. Die Durchströmung des Kühlers 10 selbst erfolgt dann in einem anderen Bereich der Tandemwalze 1. Figur 6 zeigt darüber hinaus beispielhaft, dass grundsätzlich auch eine umgekehrte Durchströmung der Tandemwalze 1 mit der Kühlluft genutzt werden kann.

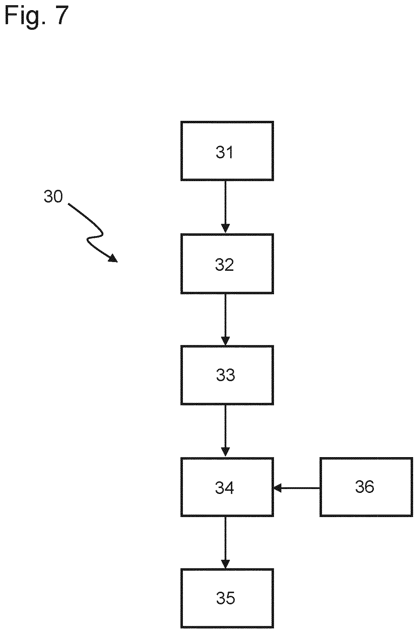

Figur 7 zeigt ein Ablaufdiagramm des erfindungsgemäßen Verfahrens 30. Das Verfahren 30 beginnt mit dem Einsaugen 31 von Kühlluft aus der Außenumgebung der Tandemwalze 1 in einen vorderen oder hinteren Maschinenraum 18, 19, bevorzugt in den vorderen Maschinenraum 18. Sodann erfolgt ein Leiten 32 der Kühlluft nach unten in den Motorraum 20 und entlang der Maschinenlängsachse a, bevorzugt nach hinten. Danach erfolgt ein Leiten 33 der Kühlluft nach oben, und bevorzugt in Maschinenlängsrichtung a nach hinten, in den jeweils anderen vorderen oder hinteren Maschinenraum 18, 19, bevorzugt den hinteren Maschinenraum 19. Es folgt das Durchströmen 34 eines im vorderen oder hinteren Maschinenraum 18, 19, bevorzugt im hinteren Maschinenraum 19, angeordneten Kühlers 10 mit der Kühlluft und schließlich ein Ausblasen 35 der Kühlluft in die Außenumgebung der Tandemwalze 1. Optional kann ein zusätzliches Einsaugen 36 von Kühlluft durch einen Ansaugkanal 22 zwischen dem Fahrerstand 2 und Lüftungsöffnungen 9, durch die der durch den Lüfter 11 geförderte Kühlluftstrom die Außenumgebung der Tandemwalze 1 austritt, erfolgen. Auch beim erfindungsgemäßen Verfahren 30 kann das Ausblasen 35 der Kühlluft derart erfolgen, dass diese in Richtung auf den Austritt des Abgases aus dem Endrohr 6 der Abgasanlage gerichtet ist und daher diese Abgase vom Fahrerstand 2 weg transportiert und aktiv mit der Luft der Außenumgebung vermischt.

Insgesamt wird durch die Erfindung der Bauraum der Tandemwalze 1, insbesondere im Innenraum der Maschinenräume 18, 19 und des Motorraums 20 optimal genutzt. Dies ermöglicht es, mehrere Komponenten der Tandemwalze 1, beispielsweise den Kühler 10 und die Flüssigkeitstanks 14 mit einem möglichst großen Volumen auszubilden und daher die Effizienz der Maschine zu steigern. Darüber hinaus ermöglicht es die Erfindung, den Kühlluftstrom vorteilhaft zu nutzen, um den Fahrer der Tandemwalze 1 vor Abgasen der Maschine zu schützen.

## Patentansprüche

1. Schemelgelenkte Tandemwalze (1) zur Bodenverdichtung, umfassend
- einen Maschinenrahmen (3) mit einem Fahrerstand (2),
- zwei in Maschinenlängsrichtung (a) voneinander beabstandete Verdichterwalzen (5), die jeweils lenkbar über eine Schemellenkung am Maschinenrahmen (3) gelagert sind,
- einen Antriebsmotor (4),
- einen Kühler (10), und
- einen dem Kühler (10) zugeordneten und einen Kühlluftstrom fördernden Lüfter (11),
**dadurch gekennzeichnet,**
**dass** der Kühler (10) in Vertikalrichtung über und/oder in Maschinenlängsrichtung (a) auf Höhe einer der Verdichterwalzen (5) angeordnet ist, dass in Maschinenlängsrichtung (a) sowohl vor als auch hinter dem Fahrerstand (2) ein zumindest teilweise von einer Abdeckung (16, 17) eingehauster Maschinenraum (18, 19) vorhanden ist, wobei die vordere Abdeckung (16) und die hintere Abdeckung (17) auf ihrer vertikal oben liegenden Seite Lüftungsöffnungen (9) für den durch den Lüfter (11) geförderten Kühlluftstrom aufweist, und dass ein Strömungskanal vorhanden ist, der derart ausgebildet ist, dass der durch den Lüfter (11) geförderte Kühlluftstrom von der Außenumgebung der Tandemwalze (1) in den vorderen Maschinenraum (18), von diesem dann vertikal nach unten und nach hinten in einen unter dem Fahrerstand (2) angeordneten Motorraum (20), anschließend im Wesentlichen horizontal durch den Motorraum (20) hindurch, von diesem in Richtung vertikal nach oben und nach hinten in den hinteren Maschinenraum (19) und von diesem wieder in die Außenumgebung der Tandemwalze (1) gefördert wird, oder umgekehrt.

2. Tandemwalze (1) nach Anspruch 1,
**dadurch gekennzeichnet,**
**dass** der Kühler (10) in Vertikalrichtung über einem Drehschemel (15) der Schemellenkung einer der Verdichterwalzen (5) angeordnet ist.

3. Tandemwalze (1) nach einem der vorhergehenden Ansprüche,
**dadurch gekennzeichnet,**
**dass** der Kühler (10) als Kühlerpaket ausgebildet ist und wenigstens zwei, insbesondere alle drei, der folgenden Kühler umfasst: einen Hydraulikflüssigkeitskühler, einen Kühlflüssigkeitskühler, einen Ladeluftkühler.

4. Tandemwalze (1) nach einem der vorhergehenden Ansprüche,
**dadurch gekennzeichnet,**
**dass** der dem Kühler (10) zugeordnete Lüfter (11) wenigstens eines der folgenden Merkmale aufweist:
- er ist in Vertikalrichtung über und/oder in Maschinenlängsrichtung (a) auf Höhe einer der Verdichterwalzen (5) angeordnet,
- er ist an einem Nebenabtrieb (13) des Antriebsmotors (4) angeordnet,
- er ist in Strömungsrichtung der Kühlluft vor dem Kühler (10) angeordnet und bläst Kühlluft durch den Kühler (10) hindurch,
- er ist in Strömungsrichtung der Kühlluft hinter dem Kühler (10) angeordnet und saugt Kühlluft durch den Kühler (10) hindurch,
- er ist von einem separaten, insbesondere hydraulischen oder elektrischen, Lüfterantrieb (12) oder von einem Nebenabtrieb (13) des Antriebsmotors (4), insbesondere über einen Riementrieb, antreibbar.

5. Tandemwalze (1) nach einem der vorhergehenden Ansprüche,
**dadurch gekennzeichnet,**
**dass** der Kühler (10) im vorderen Maschinenraum (18) oder im hinteren Maschinenraum (19) angeordnet ist und dass der dem Kühler (10) zugeordnete Lüfter (11) im vorderen Maschinenraum (18) oder im hinteren Maschinenraum (19) angeordnet ist, wobei bevorzugt der Kühler (10) und der dem Kühler (10) zugeordnete Lüfter (11) im hinteren Maschinenraum (19) angeordnet sind.

6. Tandemwalze (1) nach einem der vorhergehenden Ansprüche,
**dadurch gekennzeichnet,**
**dass** der Motorraum (20) quer zur Maschinenlängsrichtung (a) beidseitig von jeweils einer Motorraumtür (7) begrenzt ist, wobei die Motorraumtüren (7) jeweils einen Flüssigkeitstank (14) aufweisen, und dass der durch den Lüfter (11) geförderte Kühlluftstrom zwischen den beiden Flüssigkeitstanks (14) hindurch gefördert wird, wobei der Kühler (10) außerhalb des zwischen den beiden Flüssigkeitstanks (14) liegenden Bereichs angeordnet ist.

7. Tandemwalze (1) nach einem der vorhergehenden Ansprüche,
**dadurch gekennzeichnet,**
**dass** zwischen dem Fahrerstand (2) und den Lüftungsöffnungen (9) durch die der durch den Lüfter (11) geförderte Kühlluftstrom in die Außenumgebung der Tandemwalze (1) austritt, ein Ansaugkanal (22) angeordnet ist, durch den Luft aus der Außenumgebung der Tandemwalze (1) angesaugt und dem Kühlluftstrom hinzugefügt wird.

8. Tandemwalze (1) nach einem der vorhergehenden Ansprüche,
**dadurch gekennzeichnet,**
**dass** der Kühler (10) derart angeordnet ist, dass er von dem durch den Lüfter (11) geförderten Kühlluftstrom in Richtung schräg nach oben und vom Fahrerstand (2) weg durchströmt wird.

9. Tandemwalze (1) nach einem der vorhergehenden Ansprüche,
**dadurch gekennzeichnet,**
**dass** die Lüftungsöffnungen (9) durch die der durch den Lüfter (11) geförderte Kühlluftstrom in die Außenumgebung der Tandemwalze (1) austritt derart ausgebildet sind, dass der durch den Lüfter (11) geförderte Kühlluftstrom beim Austritt durch die Lüftungsöffnungen (9) in Richtung schräg nach oben und vom Fahrerstand (2) weg geleitet wird.

10. Tandemwalze (1) nach einem der vorhergehenden Ansprüche,
**dadurch gekennzeichnet,**
**dass** die Lüftungsöffnungen (9) durch die der durch den Lüfter (11) geförderte Kühlluftstrom in die Außenumgebung der Tandemwalze (1) austritt und ein Endrohr (6) einer Abgasanlage des Antriebsmotors (4) an derselben Abdeckung (16, 17) angeordnet sind, und dass die Lüftungsöffnungen (9) zumindest teilweise näher am Fahrerstand (2) angeordnet sind als das Endrohr (6).

11. Tandemwalze (1) nach einem der vorhergehenden Ansprüche,
**dadurch gekennzeichnet,**
**dass** der Kühler (10), insbesondere die Kühler, derart angeordnet ist/sind, dass er/sie vom Kühlluftstrom in wenigstens teilweise aufwärts gerichteter Richtung durchströmt wird/werden.

12. Verfahren (30) zum Betrieb einer schemelgelenkten Tandemwalze (1) gemäß den vorhergehenden Ansprüchen, umfassend die Schritte:
a) Einsaugen (31) von Kühlluft aus der Außenumgebung der Tandemwalze (1) in den vorderen oder hinteren Maschinenraum (18, 19);
b) Leiten (32) der Kühlluft nach unten in den Motorraum (20) und entlang der Maschinenlängsrichtung (a);
c) Leiten (33) der Kühlluft nach oben in den jeweils anderen vorderen oder hinteren Maschinenraum (18, 19);
d) Durchströmen (34) des im vorderen oder hinteren Maschinenraum (18, 19) angeordneten Kühlers (10) mit der Kühlluft; und
e) Ausblasen (35) der Kühlluft in die Außenumgebung der Tandemwalze (1).

13. Verfahren (30) nach Anspruch 12,
**gekennzeichnet durch**,
ein Einsaugen (36) von Kühlluft **durch** einen Ansaugkanal (22) zwischen einem Fahrerstand (2) und Lüftungsöffnungen (9) **durch** die der **durch** den Lüfter (11) geförderte Kühlluftstrom in die Außenumgebung der Tandemwalze (1) austritt.

14. Verfahren (30) nach einem der Ansprüche 12 oder 13,
**dadurch gekennzeichnet,**
**dass** das Einsaugen (31) der Kühlluft schräg nach unten und/oder das Durchströmen (34) mit Kühlluft schräg nach oben und/oder das Ausblasen (35) der Kühlluft schräg nach oben und vom Fahrerstand (2) weg erfolgt.

15. Verfahren (30) nach einem der Ansprüche 12 bis 14,
**dadurch gekennzeichnet,**
**dass** das Ausblasen (35) der Kühlluft in die Außenumgebung der Tandemwalze (1) derart erfolgt, dass der Kühlluftstrom in Richtung auf ein Endrohr (6) einer Abgasanlage des Antriebsmotors (4) geleitet wird.

## Claims

1. A pivot-steered tandem roller (1) for ground compaction, comprising
- a machine frame (3) with an operator platform (2),
- two compaction drums (5) spaced apart in the longitudinal direction (a) of the machine, each of which is steerably mounted on the machine frame (3) via a pivot steering system,
- a drive motor (4),
- a cooler (10), and
a fan (11) associated with the cooler (10) and conveying a cooling air flow,
**characterized in that**
the cooler (10) is arranged vertically above and/or in the longitudinal direction (a) of the machine at the level of one of the compaction drums (5),
a machine compartment (18, 19) which is at least partially encased by a cover (16, 17) is provided both in front of and behind the operator platform (2) in the longitudinal direction (a) of the machine, the front cover (16) and the rear cover (17) having ventilation openings (9) on their vertically upper side for the cooling air flow conveyed by the fan (11),
and that a flow channel is provided which is configured such that the cooling air flow conveyed by the fan (11) is conveyed from the outside environment of the tandem roller (1) into the front machine compartment (18), and from there vertically downward and rearward into an engine compartment (20) arranged below the operator platform (2), then essentially horizontally through the engine compartment (20), from there vertically upward and rearward into the rear machine compartment (19) and from there back into the outside environment of the tandem roller (1), or vice versa.

2. The tandem roller (1) according to claim 1,
**characterized in that**
the cooler (10) is arranged vertically above a turntable (15) of the pivot steering system of one of the compaction drums (5).

3. The tandem roller (1) according to any one of the preceding claims,
**characterized in that**
the cooler (10) is configured as a cooler package and comprises at least two, in particular all three, of the following coolers: a hydraulic fluid cooler, a coolant cooler, a charge air cooler.

4. The tandem roller (1) according to any one of the preceding claims,
**characterized in that**
the fan (11) associated with the cooler (10) has at least one of the following features:
- it is arranged vertically above and/or in the longitudinal direction (a) of the machine at the level of one of the compaction drums (5),
- it is arranged at a power take-off (13) of the drive motor (4),
- it is arranged upstream of the cooler (10) in the flow direction of the cooling air and blows cooling air through the cooler (10),
- it is arranged downstream of the cooler (10) in the flow direction of the cooling air and draws cooling air through the cooler (10),
- it can be driven by a separate, in particular hydraulic or electric, fan drive (12) or by a power take-off (13) of the drive motor (4), in particular via a belt drive.

5. The tandem roller (1) according to any one of the preceding claims,
**characterized in that**
the cooler (10) is arranged in the front machine compartment (18) or in the rear machine compartment (19), and that the fan (11) associated with the cooler (10) is arranged in the front machine compartment (18) or in the rear machine compartment (19), the cooler (10) and the fan (11) associated with the cooler (10) preferably being arranged in the rear machine compartment (19).

6. The tandem roller (1) according to any one of the preceding claims,
**characterized in that**
the engine compartment (20) is limited on both sides transversely to the longitudinal direction (a) of the machine by a respective engine compartment door (7), the engine compartment doors (7) each having a liquid tank (14), and that the cooling air flow conveyed by the fan (11) is passed through between the two liquid tanks (14), the cooler (10) being arranged outside the region located between the two liquid tanks (14).

7. The tandem roller (1) according to any one of the preceding claims,
**characterized in that**
an intake duct (22) through which air is drawn in from the outside environment of the tandem roller (1) and added to the cooling air flow is arranged between the operator platform (2) and the ventilation openings (9) through which the cooling air flow conveyed by the fan (11) exits into the outside environment of the tandem roller (1).

8. The tandem roller (1) according to any one of the preceding claims,
**characterized in that**
the cooler (10) is arranged such that the cooling air flow conveyed by the fan (11) flows through it in an oblique upward direction and away from the operator platform (2).

9. The tandem roller (1) according to any one of the preceding claims,
**characterized in that**
the ventilation openings (9) through which the cooling air flow conveyed by the fan (11) exits into the outside environment of the tandem roller (1) are configured such that the cooling air flow conveyed by the fan (11) is directed in an oblique upward direction and away from the operator platform (2) when exiting through the ventilation openings (9).

10. The tandem roller (1) according to any one of the preceding claims,
**characterized in that**
the ventilation openings (9) through which the cooling air flow conveyed by the fan (11) exits into the outside environment of the tandem roller (1) and a tail pipe (6) of an exhaust gas system of the drive motor (4) are arranged on the same cover (16, 17), and that the ventilation openings (9) are arranged at least partially closer to the operator platform (2) than the tail pipe (6).

11. The tandem roller (1) according to any one of the preceding claims,
**characterized in that**
the cooler (10), in particular the coolers, is/are arranged such that the cooling air flow flows through it/them in an at least partially upward direction.

12. A method (30) for operating a pivot-steered tandem roller (1) according to the preceding claims, comprising the steps of:
a) drawing in (31) cooling air from the outside environment of the tandem roller (1) into the front or rear machine compartment (18, 19);
b) directing (32) the cooling air downward into the engine compartment (20) and along the longitudinal direction (a) of the machine;
c) directing (33) the cooling air upward into the respective other front or rear machine compartment (18, 19);
d) passing (34) the cooling air through the cooler (10) arranged in the front or rear machine compartment (18, 19); and
e) blowing out (35) the cooling air into the outside environment of the tandem roller (1).

13. The method (30) according to claim 12,
**characterized by**
drawing in (36) cooling air through an intake duct (22) between an operator platform (2) and ventilation openings (9) through which the cooling air flow conveyed by the fan (11) exits into the outside environment of the tandem roller (1).

14. The method (30) according to any one of claims 12 or 13,
**characterized in that**
the cooling air is drawn in (31) obliquely downward and/or the cooling air is passed through (34) obliquely upward and/or the cooling air is blown out (35) obliquely upward and away from the operator platform (2).

15. The method (30) according to any one of claims 12 to 14,
**characterized in that**
the cooling air is blown out (35) into the outside environment of the tandem roller (1) such that the cooling air flow is directed toward a tail pipe (6) of an exhaust gas system of the drive motor (4).

## Revendications

1. Rouleau tandem (1) à direction articulée pour le compactage du sol, comprenant
- un bâti pour machines (3) comportant un poste de conduite (2),
- deux rouleaux compresseurs (5) espacés l'un de l'autre dans la direction longitudinale des machines (a) qui sont respectivement montés sur le bâti pour machines (3) de manière à pouvoir être dirigés par l'intermédiaire d'une direction articulée,
- un moteur d'entraînement (4),
- un refroidisseur (10), et
- un ventilateur (11) associé au refroidisseur (10) et transportant un flux d'air de refroidissement,
**caractérisé en ce**
**que** le refroidisseur (10) est disposé en direction verticale au-dessus de l'un des rouleaux compresseurs (5) et/ou dans la direction longitudinale des machines (a) à hauteur de l'un des rouleaux compresseurs, **que,** dans la direction longitudinale des machines (a), aussi bien devant que derrière le poste de conduite (2), un espace des machines (18, 19) au moins partiellement recouvert par un élément de recouvrement (16, 17) est présent, dans lequel l'élément de recouvrement avant (16) et l'élément de recouvrement arrière (17) présentent sur leur côté situé verticalement en haut des ouvertures d'aération (9) pour le flux d'air de refroidissement transporté par le ventilateur (11), et **qu**'un canal d'écoulement est présent, lequel est conçu de telle sorte que le flux d'air de refroidissement transporté par le ventilateur (11) est transporté depuis l'environnement extérieur du rouleau tandem (1) dans l'espace des machines avant (18), puis, depuis celui-ci, verticalement vers le bas et vers l'arrière dans un espace moteur (20) disposé sous le poste de conduite (2), puis sensiblement horizontalement à travers l'espace moteur (20), depuis celui-ci, en direction verticale vers le haut et vers l'arrière dans l'espace des machines arrière (19) et, depuis celui-ci, à nouveau dans l'environnement extérieur du rouleau tandem (1), ou inversement.

2. Rouleau tandem (1) selon la revendication 1,
**caractérisé en ce**
**que** le refroidisseur (10) est disposé en direction verticale au-dessus d'une articulation rotative (15) de la direction articulée de l'un des rouleaux compresseurs (5).

3. Rouleau tandem (1) selon l'une des revendications précédentes,
**caractérisé en ce**
**que** le refroidisseur (10) est réalisé sous forme de bloc-refroidisseurs et comprend au moins deux des refroidisseurs suivants, en particulier les trois : un refroidisseur de liquide hydraulique, un refroidisseur de liquide de refroidissement, un refroidisseur d'air de suralimentation.

4. Rouleau tandem (1) selon l'une des revendications précédentes,
**caractérisé en ce**
**que** le ventilateur (11) associé au refroidisseur (10) présente au moins l'une des caractéristiques suivantes :
- il est disposé en direction verticale au-dessus de l'un des rouleaux compresseurs (5) et/ou dans la direction longitudinale des machines (a) au niveau de l'un des rouleaux compresseurs,
- il est disposé sur un entraînement auxiliaire (13) du moteur d'entraînement (4),
- il est disposé avant le refroidisseur (10) dans le sens de l'écoulement de l'air de refroidissement et souffle de l'air de refroidissement à travers le refroidisseur (10),
- il est disposé derrière le refroidisseur (10) dans le sens de l'écoulement de l'air de refroidissement et aspire de l'air de refroidissement à travers le refroidisseur (10),
- il peut être entraîné par un entraînement de ventilateur (12) séparé, en particulier hydraulique ou électrique, ou par un entraînement auxiliaire (13) du moteur d'entraînement (4), en particulier par l'intermédiaire d'un entraînement à courroie.

5. Rouleau tandem (1) selon l'une des revendications précédentes,
**caractérisé en ce**
**que** le refroidisseur (10) est disposé dans l'espace des machines avant (18) ou dans l'espace des machines arrière (19) et **que** le ventilateur (11) associé au refroidisseur (10) est disposé dans l'espace des machines avant (18) ou dans l'espace des machines arrière (19), dans lequel de préférence le refroidisseur (10) et le ventilateur (11) associé au refroidisseur (10) sont disposés dans l'espace des machines arrière (19).

6. Rouleau tandem (1) selon l'une des revendications précédentes,
**caractérisé en ce**
**que** l'espace moteur (20) est délimité des deux côtés, transversalement à la direction longitudinale des machines (a), par respectivement une porte d'espace moteur (7), dans lequel les portes d'espace moteur (7) présentent respectivement un réservoir de liquide (14), et **que** le flux d'air de refroidissement transporté par le ventilateur (11) est transporté entre les deux réservoirs de liquide (14), dans lequel le refroidisseur (10) est disposé à l'extérieur de la zone située entre les deux réservoirs de liquide (14).

7. Rouleau tandem (1) selon l'une des revendications précédentes,
caractérisé en ce
**qu**'entre le poste de conduite (2) et les ouvertures d'aération (9) par lesquelles le flux d'air de refroidissement transporté par le ventilateur (11) sort dans l'environnement extérieur du rouleau tandem (1) est disposé un canal d'aspiration (22) par lequel de l'air est aspiré depuis l'environnement extérieur du rouleau tandem (1) et est ajouté au flux d'air de refroidissement.

8. Rouleau tandem (1) selon l'une des revendications précédentes,
**caractérisé en ce**
**que** le refroidisseur (10) est disposé de telle sorte que le flux d'air de refroidissement transporté par le ventilateur (11) s'écoule à travers celui-ci en direction oblique vers le haut et à l'écart du poste de conduite (2).

9. Rouleau tandem (1) selon l'une des revendications précédentes,
**caractérisé en ce**
**que** les ouvertures d'aération (9) par lesquelles le flux d'air de refroidissement transporté par le ventilateur (11) sort dans l'environnement extérieur du rouleau tandem (1) sont réalisées de telle sorte que le flux d'air de refroidissement transporté par le ventilateur (11) est dirigé en direction oblique vers le haut et à l'écart du poste de conduite (2) lors de sa sortie par les ouvertures d'aération (9).

10. Rouleau tandem (1) selon l'une des revendications précédentes,
**caractérisé en ce**
**que** les ouvertures d'aération (9) par lesquelles le flux d'air de refroidissement transporté par le ventilateur (11) sort dans l'environnement extérieur du rouleau tandem (1) et un tuyau d'extrémité (6) d'un système d'échappement du moteur d'entraînement (4) sont disposés sur le même élément de recouvrement (16, 17), et **que** les ouvertures d'aération (9) sont disposées au moins partiellement plus près du poste de conduite (2) que le tuyau d'extrémité (6).

11. Rouleau tandem (1) selon l'une des revendications précédentes,
**caractérisé en ce**
**que** le refroidisseur (10), en particulier les refroidisseurs, sont disposés de telle sorte que le flux d'air de refroidissement s'écoule à travers ceux-ci dans une direction au moins partiellement orientée vers le haut.

12. Procédé (30) permettant de faire fonctionner un rouleau tandem (1) à direction articulée selon les revendications précédentes, comprenant les étapes consistant à :
a) aspirer (31) de l'air de refroidissement depuis l'environnement extérieur du rouleau tandem (1) dans l'espace des moteurs avant ou arrière (18, 19) ;
b) diriger (32) l'air de refroidissement vers le bas dans l'espace moteur (20) et le long de la direction longitudinale des machines (a) ;
c) diriger (33) l'air de refroidissement vers le haut dans l'autre espace des machines avant ou arrière (18, 19) respectif ;
d) faire s'écouler (34) l'air de refroidissement à travers le refroidisseur (10) disposé dans l'espace des machines avant ou arrière (18, 19) ; et
e) souffler (35) l'air de refroidissement dans l'environnement extérieur du rouleau tandem (1).

13. Procédé (30) selon la revendication 12,
**caractérisé par**
une aspiration (36) d'air de refroidissement par un canal d'aspiration (22) entre un poste de conduite (2) et des ouvertures d'aération (9) par lesquelles le flux d'air de refroidissement transporté par le ventilateur (11) sort dans l'environnement extérieur du rouleau tandem (1).

14. Procédé (30) selon l'une des revendications 12 à 13,
**caractérisé en ce**
**que** l'aspiration (31) de l'air de refroidissement est effectuée de manière oblique vers le bas et/ou l'écoulement (34) de l'air de refroidissement est effectué de manière oblique vers le haut et/ou le soufflage (35) de l'air de refroidissement est effectué de manière oblique vers le haut et à l'écart du poste de conduite (2).

15. Procédé (30) selon l'une des revendications 12 à 14,
**caractérisé en ce**
**que** le soufflage (35) de l'air de refroidissement dans l'environnement extérieur du rouleau tandem (1) est effectué de telle sorte que le flux d'air de refroidissement est dirigé en direction d'un tuyau d'extrémité (6) d'un système d'échappement du moteur d'entraînement (4).
